# EUROPEAN PATENT APPLICATION

(11) **EP 4 429 007 A1**
(43) Date of publication of application: **11.09.2024**
(21) Application number: 22890254.0
(22) Date of filing: 25.10.2022
(51) Int. Cl.: H01M 50/30, H01M 50/317, H01M 50/152, H01M 50/342, H01M 10/058, H01M 10/04

(54) **CYLINDRICAL SECONDARY BATTERY AND METHOD FOR MANUFACTURING SECONDARY BATTERY**

(30) Priority: 02.11.2021 KR 20210148844
(71) Applicant: Samsung SDI Co., Ltd., Yongin-si, Gyeonggi-do 17084 (KR)
(72) Inventor: KO, Sung Gwi, Yongin-si, Gyeonggi-do 17084 (KR); SEO, Geun Ho, Yongin-si, Gyeonggi-do 17084 (KR); KIM, Dae Kyu, Yongin-si, Gyeonggi-do 17084 (KR)
(74) Representative: Gulde & Partner
(86) International application number: PCT/KR2022/016357
(87) International publication number: WO 2023/080519

(57) **Abstract**

An embodiment of the present invention relates to a cylindrical secondary battery, and the cylindrical secondary battery may comprise: a cylindrical can; an electrode assembly which includes a first electrode plate, a second electrode plate, and a separator wound together and is accommodated in the can; and a cap assembly which is insulated from the can, is electrically connected to the electrode assembly, and has a hole formed therethrough to communicate with the inside of the can. According to the embodiment of the present invention, a degassing function is applied so that gas generated before product delivery can be removed and thus deformation of the can and the cap assembly can be reduced. In addition, the occurrence of swelling of the electrode assembly due to internal gas generation can be prevented and thus performance degradation of the secondary battery can be reduced.

## Description

### [Technical Field]

An embodiment of the present invention relates to a cylindrical secondary battery in which removal of internal gas is possible and a method of manufacturing the secondary battery.

### [Background Art]

A secondary battery includes a cell including an electrode assembly including a positive electrode, a negative electrode, and a separator interposed between the positive electrode and the negative electrode, and an electrolyte impregnated in the electrode assembly.

Secondary batteries may have various exterior shapes such as a cylindrical shape, a prismatic shape, a pouch shape, and the like depending on their use. Among the above, the cylindrical secondary battery has a structure in which an electrode assembly and an electrolyte are accommodated in a cylindrical can, and one end of the can is sealed by a cap assembly. Generally, gas may be generated in the secondary battery due to repeated charging and discharging and internal chemical factors. There is a problem in that deformation of the cap assembly and the can occur due to the generation of gas.

The above-described information disclosed in the background technology of the present invention is only for improving understanding of the background of the present invention, and accordingly, may include information that does not constitute the related art.

### [Disclosure]

### [Technical Problem]

An embodiment of the present invention provides a cylindrical secondary battery in which removal of internal gas is possible and a method of manufacturing the secondary battery.

### [Technical Solution]

A cylindrical secondary battery according to an embodiment of the present invention includes: a cylindrical can; an electrode assembly in which a first electrode plate, a second electrode plate, and a separator are wound and accommodated in the can; and a cap assembly insulated from the can, electrically connected to the electrode assembly, and having a hole formed therethrough to communicate with the inside of the can.

The cap assembly may include a vent plate coupled to one side of the can, a cap down plate disposed between the vent plate and the electrode assembly to be electrically connected to the electrode assembly, and a gasket disposed between the vent plate and the can to insulate the vent plate and the can from each other.

The hole may include a degassing hole formed through a center of the vent plate, and a through hole formed through a center of the cap down plate.

The vent plate may include a notch formed to be spaced apart from the degassing hole.

In the vent plate, a thickness of a region where the notch is formed may be thinner than a thickness of a region where the degassing hole is formed.

A diameter of the cap down plate may be smaller than a diameter of the vent plate, and an upper surface of an edge of the cap down plate may be welded in close contact with a portion of a lower surface of an edge of the vent plate.

The cap assembly may further include a cap stopper that is detachably inserted into the degassing hole and the through hole to close the degassing hole and the through hole after the cap assembly is assembled to the can.

The cap assembly may further include a rivet inserted into the degassing hole and the through hole to close the degassing hole and the through hole after removing the cap stopper when gas is generated in the can.

Further, the present invention provides a method of manufacturing a cylindrical secondary battery including: accommodating an electrode assembly in a can and electrically connecting the electrode assembly and the can; electrically connecting a cap assembly to the electrode assembly; assembling the cap assembly to the can; inserting a cap stopper into a hole passing through the cap assembly to close the hole; and coupling a rivet to the hole passing through the cap assembly to close the hole after removing the cap stopper and discharging gas when the gas is generated.

### [Advantageous Effects]

According to an embodiment of the present invention, since a degassing function is applied and thus gas generated can be removed before product shipment, deformation of a can and a cap assembly can be reduced. Further, the occurrence of swelling of an electrode assembly according to internal gas generation can be prevented to reduce performance degradation of a secondary battery.

### [Description of Drawings]

FIG. 1 is a cross-sectional view illustrating a cylindrical secondary battery according to one embodiment of the present invention.
FIG. 2 is a plan view of a cap assembly according to FIG. 1.
FIG. 3 is a plan view illustrating a rear surface of the cap assembly according to FIG. 1.
FIG. 4 is a cross-sectional view of the cap assembly according to FIG. 1.
FIG. 5 is a cross-sectional view illustrating a temporarily sealed state of the cap assembly according to FIG. 4.
FIG. 6 is a cross-sectional view illustrating a riveted state of the cap assembly according to FIG. 4.
FIG. 7 is a cross-sectional view illustrating a cap assembly of a cylindrical secondary battery according to another embodiment of the present invention.

### [Modes of the Invention]

The embodiments of the present invention are provided to more completely describe the present invention to those skilled in the art, the following embodiments may be modified into various other forms, and the scope of the present invention is not limited to the following embodiments. Rather, these embodiments are provided to make the present invention more faithful and complete and to fully convey the spirit of the present invention to those skilled in the art.

Further, in the following drawings, a thickness and a size of each layer are exaggerated for convenience and clarity of description, and the same reference numerals indicate the same elements in the drawings. As used in the present specification, the term "and/or" includes any one of and all combinations of one or more of the listed items. Further, the meaning of "being connected" in the present specification refers to not only a case in which member A and member B are directly connected, but also a case in which member C is interposed between member A and member B to indirectly connect member A and member B.

The terms used in the present specification are used to describe specific embodiments and are not intended to limit the present invention. As used in the present specification, a singular form may include a plural form unless the context clearly indicates otherwise. Further, when used in the present specification, "comprise" and/or "comprising" specify(ies) the presence of mentioned features, numbers, steps, operations, members, elements and/or groups thereof, and do(es) not exclude the presence or addition of one or more other features, numbers, steps, operations, members, elements and/or groups.

Although the terms first, second, and the like are used in the present specification to describe various members, components, regions, layers and/or parts, it is obvious that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from the teachings of the present invention.

Spatially-related terms such as "beneath," "below," "lower," "above," and "upper" are used for easy understanding of one element or feature and another element or feature shown in the drawings. These spatially-related terms are provided for easy understanding of the present invention according to various process states or usage states of the present invention, and are not intended to limit the present invention. For example, when the elements or features in the drawings are reversed, the element or feature described as "lower" or "below" "becomes "upper" or "above." Accordingly, "lower" is a concept encompassing "upper" or "below."

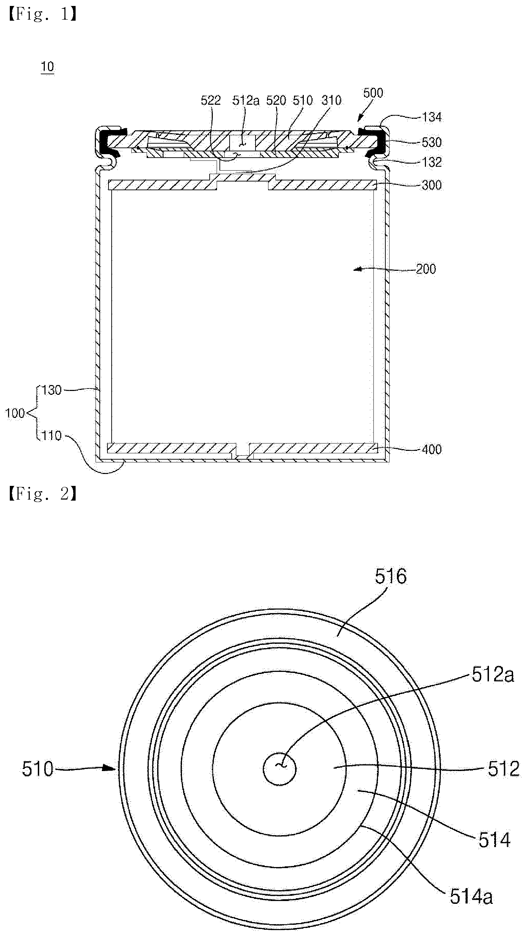

Hereinafter, a cylindrical secondary battery according to the embodiment of the present invention will be described in detail with reference to the accompanying drawings (for convenience of description, an upper side will be defined as an upper portion and a lower side will be defined as a lower portion based on FIG. 1.

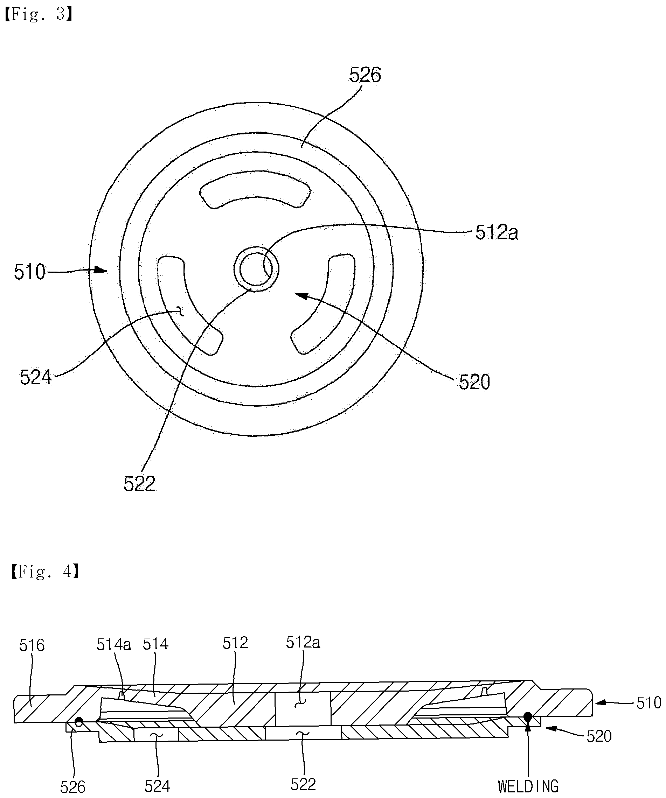

FIG. 1 is a cross-sectional view illustrating a cylindrical secondary battery according to one embodiment of the present invention. FIG. 2 is a plan view of a cap assembly according to FIG. 1. FIG. 3 is a plan view illustrating a rear surface of the cap assembly according to FIG. 1. FIG. 4 is a cross-sectional view of the cap assembly according to FIG. 1.

As shown in FIG. 1, a cylindrical secondary battery 10 according to one embodiment of the present invention may include a cylindrical can 100, an electrode assembly 200 inserted into the can 100, a first electrode current collector plate 300 and a second electrode current collector plate 400 electrically connected to the electrode assembly 200, and a cap assembly 500 coupled to one end of the can 100.

The can 100 may include a circular bottom portion 110 and a side portion 130 extending in an upward direction from the bottom portion 110. The side portion 130 has a cylindrical shape, and an upper end thereof is open to form an opening. The bottom portion 110 and the side portion 130 may be integrally formed, or may be separately formed and coupled to each other. In a process of manufacturing the secondary battery 10, the electrode assembly 200 is accommodated in the can 100 along with an electrolyte through the opening, and the cap assembly 500 is coupled to the opening to seal the can 100. The can 100 may be formed of steel, a steel alloy, nickel-plated steel, a nickel-plated steel alloy, aluminum, an aluminum alloy, or equivalents thereof, but is not limited thereto. A beading portion 132 may be concavely formed inward adjacent to the upper end of the side portion 130, and a crimping portion 134 in which an end portion of the side portion 130 is bent may be formed above the beading portion 132. The beading portion 132 supports a lower portion of the cap assembly 500 and the crimping portion 134 supports an upper portion of the cap assembly 500.

The electrode assembly 200 may include a first electrode plate, a second electrode plate, and a separator. For example, the first electrode plate may be a positive electrode plate in which a positive electrode active material layer (for example, a transition metal oxide (LiCoO₂, LiNiO₂, LiMn₂O₄, or the like)) is formed on both surfaces. A second electrode uncoated portion where the positive electrode active material layer is not formed may be formed in a portion of the first electrode plate. The first electrode uncoated portion may be disposed to face the opening of the can 100. Further, for example, the second electrode plate may be a negative electrode plate in which a negative electrode active material layer (for example, graphite, carbon, or the like) is formed on both surfaces. A first electrode uncoated portion where the negative electrode active material layer is not formed may be formed in a portion of the second electrode plate. The second electrode uncoated portion may be disposed to face the bottom portion 110 of the can 100. The separator may be interposed between the first electrode plate and the second electrode plate to prevent a short circuit and allow only lithium ions to move. For example, the first electrode plate may be an aluminum (Al) foil, the second electrode plate may be a copper (Cu) or nickel (Ni) foil, and the separator may be polyethylene (PE) or polypropylene (PP), but the present invention is not limited to the above-described materials. The first electrode plate, the second electrode plate, and the separator may be wound in a roughly cylindrical shape and accommodated in the can 100. In this case, the first electrode uncoated portion may be electrically connected to the first electrode current collector plate 300, and the second electrode uncoated portion may be electrically connected to the second electrode current collector plate 400.

The first electrode current collector plate 300 may be welded to the first electrode uncoated portion of the positive electrode plate and electrically connected to the cap assembly 500 through a first electrode lead 310. Accordingly, the first electrode plate and the cap assembly 500 may be electrically connected. The first electrode current collector plate 300 may have a roughly disk shape. Alternatively, although not shown in the drawings, a base material tab may be formed in the first electrode plate, and the first electrode current collector plate 300 may be directly welded to the base material tab of the first electrode plate.

The second electrode current collector plate 400 may be welded to the second electrode uncoated portion of the negative electrode plate and the bottom portion 110 of the can 100. Accordingly, the second electrode plate and the can 100 may be electrically connected. The second electrode current collector plate 400 may have a roughly disk shape. Alternatively, although not shown in the drawings, a base material tab may be formed in the second electrode plate, and the second electrode current collector plate 400 may be welded to the bottom portion 110 of the can 100.

As shown in FIGS. 2 to 4, the cap assembly 500 may include a vent plate 510, a cap down plate 520, and a gasket 530.

As shown in FIGS. 2 and 4, the vent plate 510 has a roughly disk shape and may include a first support 512 through which a degassing hole 512a is formed, a vent portion 514 connected to the first support 512 and having a notch 514a, and a second support 516 connected to the vent portion 514 and coupled to the side portion 130 of the can 100.

The first support 512 is a portion having a certain thickness, and the degassing hole 512a is formed through a center of the first support 512. A lower surface of the first support 512 is in contact with an upper surface of the cap down plate 520. A thickness of the first support 512 may gradually decrease toward the outside. The vent portion 514 is integrally formed with the outside of the first support 512. The degassing hole 512a communicates with the inside of the can 100 through the cap down plate 520. When gas is generated in the secondary battery 10, the gas may be discharged to the outside through the degassing hole 512a. A lower surface of the first support 512 may protrude more downward than a lower surface of the second support 516.

The vent portion 514 is formed between the first support 512 and the second support 516 and has a relatively thin thickness compared to the first support 512 and the second support 516. The notch 514a is formed in a circular shape on the vent portion 514 and broken when the gas pressure exceeds a certain level or more when gas is generated and thus becomes a gas discharge path. The notch 514a may be formed at a side close to the second support 516.

The second support 516 is an edge portion of the vent plate 510, is connected to the outside of the vent portion 514, and is integrally formed with the vent portion 514. A height of an upper surface of the second support 516 may be lower than a height of an edge of the vent portion 514. The gasket 530 is coupled to the outside of the second support 516, and the second support 516 is fixed by the crimping portion 134 of the can 100 with the gasket 530 interposed therebetween. Further, a portion of the cap down plate 520 is in close contact with the lower surface of the second support 516.

As shown in FIGS. 3 and 4, the cap down plate 520 is disposed under the vent plate 510, and electrically connected to the vent plate 510 and the first electrode current collector plate 300. FIG. 1 illustrates that the cap down plate 520 is electrically connected to the first electrode current collector plate 300 by the first electrode lead 310, but the cap down plate 520 may also be directly connected to the first electrode current collector plate 300 by welding. The cap down plate 520 has a roughly disk shape and may have a smaller diameter than the vent plate 510. A through hole 522 which communicates with the above-described degassing hole 512a is formed through a center of the cap down plate 520. An upper surface of the edge of the cap down plate 520 is in close contact with the lower surface of the second support 516 of the vent plate 510. This portion is defined as a third support 526. Based on the third support 526, other portions may have lower upper surface heights than the third support 526. That is, an upper surface of the cap down plate 520 other than the third support 526 may be formed concavely toward the first electrode current collector plate 300. A plurality of slots 524 which serve as flow paths when gas is generated may be formed to pass through a region between an outer region of the through hole 522 and the third support 526.

The upper surface of the cap down plate 520 is in close contact with the lower surface of the first support 512, and an upper surface of the third support 526 is in close contact with the lower surface of the second support 516. A welded portion may be formed by welding a portion where the second support 516 and the third support 526 are in close contact. Since the second support 516 and the third support 526 are welded to each other, electrical connection between the electrode assembly 200 and the cap assembly 500 is maintained as coupling between the vent plate 510 and the cap down plate 520 is maintained even when the notch 514a is broken and the first support 512 is removed when gas is generated in the secondary battery 10.

Referring to FIG. 1, the gasket 530 has a roughly ring shape and may be formed to have a certain width. The gasket 530 may be formed to surround part or all of the second support 516. The cap assembly 500 is insulated from the can 100 by the gasket 530 and electrically connected to the first electrode current collector plate 300. Accordingly, when the first electrode current collector plate 300 is a negative electrode current collector plate, the cap assembly 500 may serve as a negative electrode.

Hereinafter, a method of manufacturing the secondary battery having the above-described structure will be briefly described.

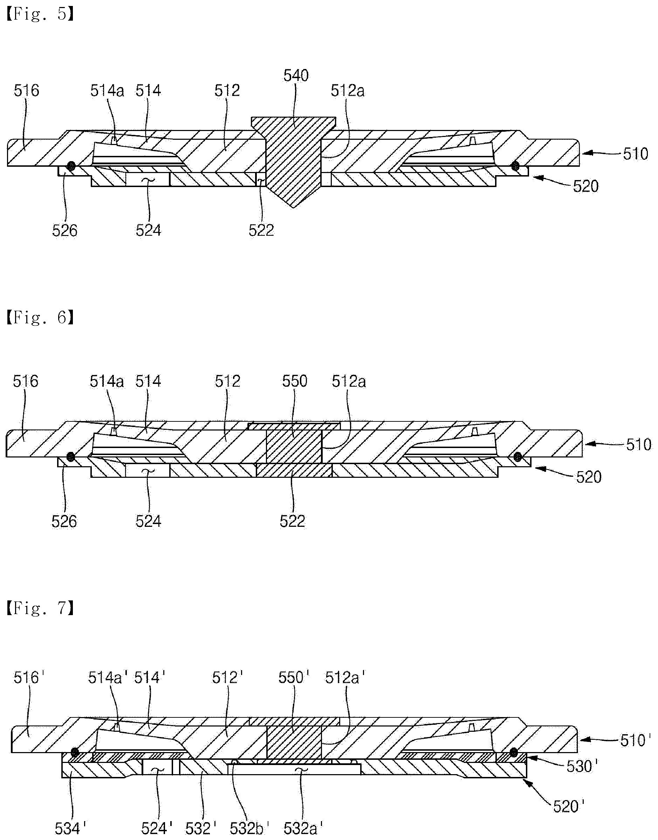

FIG. 5 is a cross-sectional view illustrating a temporarily sealed state of the cap assembly according to FIG. 4. FIG. 6 is a cross-sectional view illustrating a riveted state of the cap assembly according to FIG. 4.

After welding each of the first electrode current collector plate 300 and the second electrode current collector plate 400 to the electrode assembly 200, the electrode assembly 200 is inserted into the can 100 so that the first electrode current collector plate 300 faces upward and the electrolyte is injected. After welding the vent plate 510 and the cap down plate 520 and coupling the gasket 530 to form the cap assembly 500, the cap assembly 500 is seated on the beading portion 132 of the side portion 130. Thereafter, the crimping portion 134 is formed to assemble the cap assembly 500 to the can 100.

In this state, as shown in FIG. 5, the secondary battery 10 is sealed by inserting a cap stopper 240 into the degassing hole 512a. The cap stopper 240 is a removable component, and may be made of a resin or the like and press-fitted into the degassing hole 512a.

When gas is generated in the secondary battery 10 before product shipment, the internal gas may be discharged through the degassing hole 512a by removing the cap stopper 240. When gas discharging is completed, as shown in FIG. 7, a rivet 550 may be inserted into the degassing hole 512a to close the degassing hole 512a. For example, the rivet 550 may be a blind rivet.

Meanwhile, the structure of the above-described cap assembly may also be applied to a cap structure having a current interrupt device (CID) function (detailed descriptions of the same structure and features as the above-described embodiment will be omitted).

FIG. 7 is a cross-sectional view illustrating a cap assembly of a cylindrical secondary battery according to another embodiment of the present invention.

As shown in FIG. 7, a cap assembly 500' may include a vent plate 510' and a cap down plate 520', and an insulating member 530' disposed between the vent plate 510' and the cap down plate 520'. In a manufacturing process, the structures of a cap stopper and a rivet 550' may be applied in the same manner as the above-described embodiment.

A structure of the vent plate 510' may be the same as the above-described embodiment (only reference numbers are shown differently for distinction).

A through hole 522' may be formed in a center of the cap down plate 520', and a plurality of slots 524' may be formed through the cap down plate 520' to be spaced apart from the through hole 522'. A certain region of an outer edge of a portion where the through hole 522' and the slots 524' are formed is defined as a third support 526'. An upper surface and a lower surface of the third support 526' may be disposed relatively lower than other portions. That is, the cap down plate 520' has a shape in which a region other than the third support 526' may be formed convexly toward an upper portion. An upper surface of the convex portion is in close contact with a lower surface of a first support 512' of the vent plate 510', and the third support 526 is in close contact with the insulating member 530'. Accordingly, the cap down plate 520' is electrically connected to the vent plate 510' only in a region of the first support 512'.

A cross-section of the through hole 522' may be formed in a stepped form. In this case, a diameter of the through hole 522' in a direction of the electrode assembly may be formed to be larger than a diameter of the through hole 522' in a direction of the degassing hole 512a'. When a region in the direction of the degassing hole 512a' is defined as an upper portion of the through hole 522', and region in the direction of the electrode assembly is defined as a lower portion of the through hole 522', a CID notch 532b' may be formed in a plate surface of the cap down plate 520' adjacent to the upper portion of the through hole 522'. The CID notch 532b' is a portion broken by a gas pressure above a certain level when gas is generated and performs the same function as a notch 514a' of the vent plate 510'. When the rivet 550' is coupled, the rivet 550' is inserted into the degassing hole 512a' and the upper portion of the through hole 522', and the vent plate 510' and the cap down plate 520' are connected to each other. When the notch 514a' is broken and the first support 512' is lifted in an upward direction by the gas pressure, the upper region of the through hole 522' connected by the rivet 550' is also lifted upward. Accordingly, the CID notch 532b' is broken, and the first support 512' and a region around the CID notch 532b' are removed together. Accordingly, since there is no portion electrically connected to the electrode assembly, current between the electrode assembly and the cap assembly 500' is blocked. That is, the cap down plate 520' functions as a current interrupt device (CID).

As described above, since a degassing function is applied to the cap assembly and thus gas generated may be removed before product shipment, deformation of the can and the cap assembly may be reduced. Further, the occurrence of swelling of the electrode assembly according to internal gas generation may be prevented to reduce performance degradation of the secondary battery.

What has been described above is only one embodiment for implementing the present invention, and the present invention is not limited to the above-described embodiment, and as claimed in the following claims, the technical spirit of the present invention extends to the extent that various modifications can be made by anyone skilled in the art without departing from the gist of the present invention.

## Claims

1. A cylindrical secondary battery comprising:
a cylindrical can;
an electrode assembly in which a first electrode plate, a second electrode plate, and a separator are wound and accommodated in the can; and
a cap assembly insulated from the can, electrically connected to the electrode assembly, and having a hole formed therethrough to communicate with the inside of the can.

2. The cylindrical secondary battery of claim 1, wherein the cap assembly includes a vent plate coupled to one side of the can, a cap down plate disposed between the vent plate and the electrode assembly to be electrically connected to the electrode assembly, and a gasket disposed between the vent plate and the can to insulate the vent plate and the can from each other.

3. The cylindrical secondary battery of claim 2, wherein the hole includes a degassing hole formed through a center of the vent plate and a through hole formed through a center of the cap down plate.

4. The cylindrical secondary battery of claim 3, wherein the vent plate includes a notch formed to be spaced apart from the degassing hole.

5. The cylindrical secondary battery of claim 4, wherein, in the vent plate, a thickness of a region where the notch is formed is thinner than a thickness of a region where the degassing hole is formed.

6. The cylindrical secondary battery of claim 5, wherein:
a diameter of the cap down plate is smaller than a diameter of the vent plate; and
an upper surface of an edge of the cap down plate is welded in close contact with a portion of a lower surface of an edge of the vent plate.

7. The cylindrical secondary battery of claim 6, wherein the cap assembly further includes a cap stopper that is detachably inserted into the degassing hole and the through hole to close the degassing hole and the through hole after the cap assembly is assembled to the can.

8. The cylindrical secondary battery of claim 7, wherein the cap assembly further includes a rivet inserted into the degassing hole and the through hole to close the degassing hole and the through hole after removing the cap stopper when gas is generated in the can.

9. A method of manufacturing a cylindrical secondary battery, comprising:
accommodating an electrode assembly in a can and electrically connecting the electrode assembly and the can;
electrically connecting a cap assembly to the electrode assembly;
assembling the cap assembly to the can;
inserting a cap stopper into a hole passing through the cap assembly to close the hole; and
coupling a rivet to the hole passing through the cap assembly to close the hole after removing the cap stopper and discharging gas when the gas is generated.
